(19)

**Europäisches Patentamt**
**European Patent Office**
**Office européen des brevets**

(11) **EP 2 300 991 B1**

(12) **EUROPEAN PATENT SPECIFICATION**

(45) Date of publication and mention
of the grant of the patent:
**14.11.2012 Bulletin 2012/46**

(51) Int Cl.:
***G06T 15/50*** (2011.01)    ***G06T 15/60*** (2006.01)

(21) Application number: **08776876.8**

(86) International application number:
**PCT/JP2008/001979**

(22) Date of filing: **24.07.2008**

(87) International publication number:
**WO 2010/010601 (28.01.2010 Gazette 2010/04)**

(54) **IMAGE PROCESSING DEVICE, METHOD, AND SYSTEM**

BILDVERARBEITUNGSEINRICHTUNG, VERFAHREN UND SYSTEM

DISPOSITIF, PROCÉDÉ ET SYSTÈME DE TRAITEMENT D'IMAGES

(84) Designated Contracting States:
**AT BE BG CH CY CZ DE DK EE ES FI FR GB GR HR HU IE IS IT LI LT LU LV MC MT NL NO PL PT RO SE SI SK TR**

(43) Date of publication of application:
**30.03.2011 Bulletin 2011/13**

(73) Proprietor: **Thomson Licensing**
**92130 Issy-les-Moulineaux (FR)**

(72) Inventor: **TAMAOKI, Nobumasa**
**Kobe-shi**
**Hyogo 651-2241 (JP)**

(74) Representative: **Hofstetter, Schurack & Partner**
**Patent- und Rechtsanwälte**
**Balanstrasse 57**
**81541 München (DE)**

(56) References cited:
**EP-A- 1 696 387     US-A1- 2004 237 053**
**US-B1- 7 113 183**

- **TOMAS AKENINE-MÖLLER,ERIC HAINES: "Real-time Rendering 2nd Edition, pages 101-106, 148-149, 250-254" 2002, A K PETERS, LTD. , XP002512379 ISBN: 1-56881-182-9 * page 102, paragraphs 3-4, page 148, section 5.7.1, page 250, last paragraph, page 252, last but one paragraph, page 253, first paragraph ***
- **"Final Cut Pro User's Manual" 1999, APPLE COMPUTER INC. , CUPERTINO, CA, USA , XP002512579 page 17, paragraph 1 page 231**

**Description**

Technical Field

The present invention relates to image processing, and in particular, rendering processing of computer graphics (CG).

Background Art

Generating a shadow of an object, i.e., shadow generation processing is known as one type of CG processing. The shadow generation processing is used in not only three-dimensional CG, but also two-dimensional CG in window systems and the like.

Conventional shadow generation processing is typically performed by the following procedure. First, background data is written into a frame buffer. Next, calculation of data of a shadow of a foreground is performed by using a temporary buffer separate from the frame buffer, and then the data is stored in the temporary buffer. In this case, using the temporary buffer allows the calculation of the shadow data irrespective of the background data written in the frame buffer, and accordingly can facilitate preventing redundant shadow rendering, i.e., preventing a plurality of different shadows from being superimposed in the same pixel to excessively darken a shadow color in the pixel. Subsequently, image data in the temporary buffer is alpha blended with image data in the frame buffer, and then alpha blended data is written into the frame buffer. Finally, data of the foreground is written into the frame buffer.

Patent Citation 1
US Patent No. 6437782

Document US 2004/0237053 A1 discloses a system and method for implementing an image ancillary to a cursor. The system includes a user input device that provides a user input signal indicative of user inputs which are used to display a cursor image on a display device. Furthermore, an ancillary image based on at least one characteristic of the cursor image is displayed.

Moreover, the article of Tomas Akenine-Möller, Eric Haines: "Real-time Rendering" second edition, pages 101 - 106, 148 - 149, 250 — 254, A K PETERS, Ltd., ISBN 56881-182-9 discloses a concept for alpha blending, alpha mapping and planar shadowing.

Disclosure of Invention

Technical Problem

Recently, further improvement of image processing speed is required to satisfy requirements for further improvement of functionality and image quality in CG However, the conventional shadow generation processing requires the temporary buffer separate from the frame buffer, as described above. For example, image processing in HDTV (High Definition TeleVision: high-definition TV) requires such a temporary buffer having a memory capacity of 4 MB. For this reason, it is difficult for the conventional shadow generation processing to further reduce the capacity and bandwidth of a memory assigned to image processing. This makes it difficult to further improve image processing speed.

It is an object of the invention to provide a novel and useful image processing device and method that solve the aforementioned problems. It is a concrete object of the invention to provide a novel and useful image processing device and method that can render a shadow without a temporary buffer.

Technical Solution

According to one aspect of the invention, a device is provided as defined in claim 1.

According to the invention, the processor writes the data of the shadow of the foreground into the buffer in which an image will be eventually formed, before writing the background data into the buffer. Moreover, the processor alpha blends the background data with the data of the shadow of the foreground that has been already written in the buffer. Then, the processor writes the foreground data into the buffer in which the alpha blended data has been written. Thus, the composite image of the foreground, the shadow thereof, and the background is formed in the buffer. Accordingly, the device of the invention can render the image of the shadow of the foreground without a temporary buffer separate from the buffer.

According to another aspect of the invention, a method is provided as defined in claim 5.

According to the invention, the data of the shadow of the foreground is written in the buffer before the background data, and then the background data is alpha blended with the data of the shadow of the foreground that has been already written in the buffer. Moreover, the foreground data is written into the buffer in which the alpha blended data has been written. Thus, the composite image of the foreground, the shadow thereof, and the background is formed in the buffer. Accordingly, the method of the invention can render the image of the shadow of the foreground without a temporary buffer separate from the buffer.

According to claim 6, a storage medium with a program is provided.

Advantageous Effects

The invention can provide an image processing device and method that can render a shadow without a temporary buffer.

Brief Description of Drawings

Fig. 1 is a block diagram showing a hardware configuration of an image processing system according to the first embodiment of the invention.

Fig. 2 is a block diagram showing a functional configuration of the image processing device according to the first embodiment of the invention.

Fig. 3A is an illustration of generating data of a shadow of a foreground and writing the data into a frame buffer.

Fig. 3B is a schematic diagram showing the data of the shadow of the foreground written in the frame buffer.

Fig. 4A is an illustration of alpha blending the data of the shadow of the foreground with data of a background.

Fig. 4B is a schematic diagram showing data of the shadow of the foreground and the background alpha blended and written in the frame buffer.

Fig. 5A is an illustration of writing data of the foreground into the frame buffer.

Fig. 5B is a schematic diagram showing the data of the foreground, the background, and the shadow of the foreground written in the frame buffer.

Fig. 6 is a flowchart of an image processing method according to the first embodiment of the invention.

Fig. 7 is a flowchart of a procedure of alpha blending the data of the shadow of the foreground with the data of the background.

Fig. 8 is a block diagram showing a hardware configuration of a video editing system according to the second embodiment of the invention.

Fig. 9 is a block diagram showing a functional configuration of the video editing system according to the second embodiment of the invention.

Fig. 10 is a drawing showing an example of an editing window.

Best Mode for Carrying Out the Invention

Preferred embodiments according to the invention will be described below, referring to the drawings.

<The first embodiment>

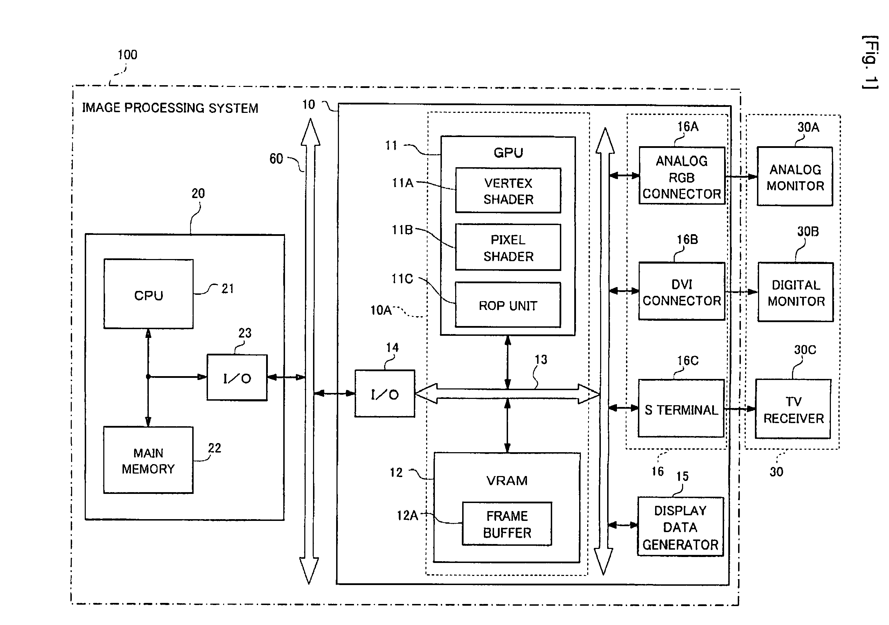

Fig. 1 is a block diagram of an image processing system 100 according to the first embodiment of the invention. Referring to Fig. 1, this image processing system 100 is realized by using a computer terminal such as a personal computer, and causes a monitor 30 connected to the computer terminal, e.g., an analog monitor 30A, a digital monitor 30B, and/or a TV receiver 30C, to display a CG image. The analog monitor 30A is a liquid crystal display (LCD) or a cathode-ray tube monitor (CRT). The digital monitor 30B is an LCD or a digital projector. The TV receiver 30C may be replaced with a videotape recorder (VTR).

The image processing system 100 includes a graphics board 10, a mother board 20, and a system bus 60. The graphics board 10 includes an image processing device 10A, an internal bus 13, an input/output interface (I/O) 14, a display data generator 15, and an AV terminal 16. The mother board 20 includes a CPU 21, a main memory 22, and an I/O 23. The graphics board 10 may be integrated with the mother board 20. The system bus 60 is a bus connecting between the graphics board 10 and the mother board 20. The system bus 60 complies with the PCI-Express standard. Alternatively, the system bus 60 may comply with the PCI or AGP standard.

The image processing device 10A includes a processor dedicated to graphics processing (GPU: Graphics Processing Unit) 11 and a video memory (VRAM) 12. The GPU 11 and the VRAM 12 are connected through the internal bus 13.

The GPU 11 is a logic circuit such as a chip, designed specifically for arithmetic processing required for graphics display. CG processing performed by the GPU 11 includes geometry processing and rendering processing. Geometry processing uses geometric calculation, in particular coordinate conversion, to determine the layout of each model projected onto a two-dimensional screen from a three-dimensional virtual space where the model is supposed to be placed. Rendering processing generates data of an image to be actually displayed on the two-dimensional screen, on the basis of the layouts of models on the two-dimensional screen determined by geometry processing. Rendering processing includes hidden surface removal, shading, shadowing, texture mapping, and the like.

The GPU 11 includes a vertex shader 11A, a pixel shader 11B, and an ROP (Rendering Output Pipeline or Rasterizing OPeration) unit 11C.

The vertex shader 11A is a computing unit dedicated to geometry processing, used in geometric calculation required for geometry processing, in particular calculation related to coordinate conversion The vertex shader 11A may be a computing unit provided for each type of geometric calculation, or a computing unit capable of performing various types of geometric calculation depending on programs.

The pixel shader 11B is a computing unit dedicated to rendering processing, used in calculation related to color information of each pixel required for rendering processing, i.e., pixel data. The pixel shader 11B can read image data pixel by pixel from the VRAM 12, and calculate a sum and a product of components of the image data pixel by pixel. The pixel shader 11B may be a computing unit provided for each type of calculation related to pixel data processing, or a computing unit capable of performing various types of calculation pixel by pixel depending on programs. In addition, the same programmable computing unit may be used as the vertex shader 11A and the pixel shader 11B depending on programs.

In the first embodiment, pixel data is represented by ARGB 4:4:4:4, for example. The letters RGB represent three primary color components. The letter A represents an alpha value. Here, an alpha value represents a weight assigned to a color component of the same pixel data when alpha blended with a color component of another pixel data. An alpha value is a numerical value ranging from 0 to 1 when normalized, or a numerical value ranging from 0% to 100% when expressed as a percentage. An alpha value may refer to a degree of opacity of a color component of pixel data in alpha blending.

The ROP unit 11C is a computing unit dedicated to rendering processing, which writes pixel data generated by the pixel shader 11B into the VRAM 12 in rendering processing. In addition, the ROP unit 11C can calculate a sum and a product of corresponding components of the pixel data and another pixel data stored in the VRAM 12. Especially by using this function, the ROP unit 11C can alpha blend image data stored in a frame buffer 12A with image data stored in another area of the VRAM 12, and then write alpha blended data into the frame buffer 12A.

The VRAM 12 is, for example, a synchronous DRAM (SDRAM), and preferably a DDR (Double-Data-Rate) SDRAM or GDDR (Graphic-DDR) SDRAM. The VRAM 12 includes the frame buffer 12A. The frame buffer 12A stores one-frame image data processed by the GPU 11 to be provided to the monitor 30. Each memory cell of the frame buffer 12A stores color information of one pixel, i.e., a set of pixel data. Here, the pixel data is represented by ARGB 4:4:4:4, for example. The VRAM 12 includes a storage area of image data such as various types of textures and a buffer area assigned to arithmetic processing by the GPU 11, in addition to the frame buffer 12A.

The I/O 14 is an interface connecting the internal bus 13 to the system bus 60, thereby exchanging data between the graphics board 10 and the mother board 20 through the system bus 60. The I/O 14 complies with the PCI-Express standard. Alternatively, the I/O 14 may comply with the PCI or AGP standard. The I/O 14 may be implemented in the same chip as the GPU 11 is.

The display data generator 15 is a hardware unit, such as a chip, to read pixel data from the frame buffer 12A and provide the read data as data to be displayed. The display data generator 15 allocates the address range of the frame buffer 12A to the screen of the monitor 30. Each time the display data generator 15 generates a reading address in the address range, the display data generator 15 sequentially reads pixel data from the reading address, and provides the pixel data as a series of data to be displayed. The display data generator 15 may be implemented in the same chip as the GPU 11 is.

The AV terminal 16 is connected to the monitor 30, converts data provided from the display data generator 15 to be displayed into a signal output format suitable for the monitor 30, and provides the data to the monitor 30. The AV terminal 16 includes, for example, an analog RGB connector 16A, a DVI connector 16B, and an S terminal 16C. The analog RGB connector 16A converts data to be displayed into analog RGB signals, and provides the signals to the analog monitor 30A. The DVI connector 16B converts data to be displayed into DVI signals, and provides the signals to the digital monitor 30B. The S terminal 16C converts data to be displayed into an NTSC, PAL, or HDTV format of TV signals, and provides the signals to the TV receiver 30C. In this case, the TV signals may be any of S signals, composite signals, and component signals. In addition, the AV terminal 16 may include other types of connector and terminal such as a HDMI connector and a D terminal. Note that the GPU 11 may have the function of converting data to be displayed into a suitable signal format, instead of the AV terminal 16. In this case, the GPU 11 converts data to be displayed into a signal format suitable for a target type of the monitor 30, and provides the data to the monitor 30 through the AV terminal 16.

The CPU 21 executes a program stored in the main memory 22, and then provides image data to be processed to the graphics board 10 and controls operation of components of the graphics board 10, according to the program. The CPU 21 can write image data from the main memory 22 into the VRAM 12. At that time, the CPU 21 may convert the image data into a form that the GPU 11 can treat, e.g., ARGB 4:4:4:4.

The main memory 22 stores a program to be executed by the CPU 21 and image data to be processed by the graphics board 10.

The I/O 23 is an interface connecting the CPU 21 and the main memory 22 to the system bus 60, then exchanging data between the graphics board 10 and the mother board 20 through the system bus 60. The I/O 23 complies with the PCI-Express standard. Alternatively, the I/O 23 may comply with the PCI or AGP standard.

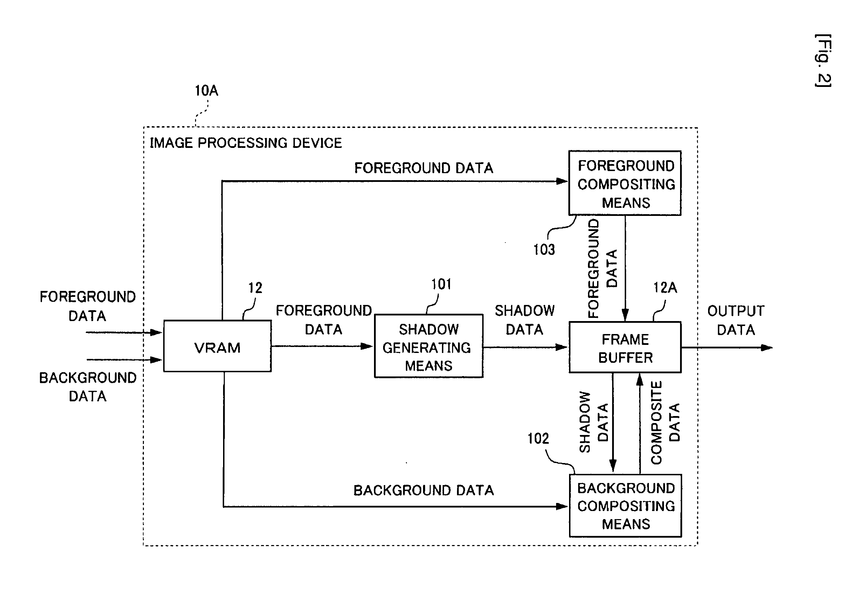

Fig. 2 is a block diagram showing a functional configuration of the image processing device 10A. Referring to Fig. 2, the image processing device 10A includes a shadow generating means 101, a background compositing means 102, and a foreground compositing means 103. These three means 101, 102, and 103 are realized by the GPU 11 so that they perform processes for generating and rendering a shadow of a foreground on a background. Here, data of the foreground and data of the background are previously stored in the VRAM 12, for example, according to instructions generated by the CPU 21. Note that the data may be stored in the VRAM 12 according to instructions generated by the GPU 11 instead of the CPU 21. Alternatively, the foreground data and the background data may be stored in a memory accessible to the CPU 21 or the GPU 11 such as the main memory 22, instead of the VRAM 12.

The shadow generating means 101 generates data of the shadow of the foreground from the foreground data stored in the VRAM 12, and writes the generated data into the frame buffer 12A, according to instructions from the CPU 21.

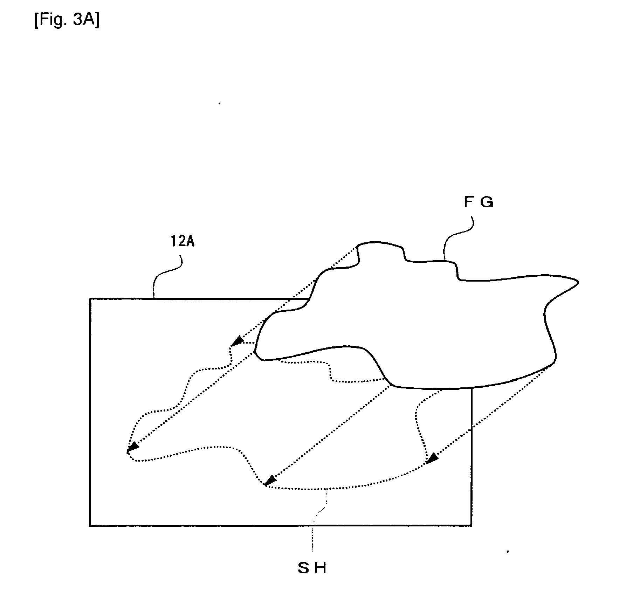

Fig. 3A is an illustration of generating data of a shadow SH of a foreground FG and writing the data into the frame buffer 12A by the shadow generating means 101. Referring to Fig. 3A, the shadow generating means 101 first fills the entirety of the frame buffer 12A with pixel data that represents a color of the shadow SH and an alpha value of 0%. Next, the shadow generating means 101 generates an alpha value of the shadow SH of the foreground FG from data of the foreground FG stored in the VRAM 12, and writes the generated alpha data into the frame buffer 12A. In this case, the shadow generating means 101 may calculate a shape of the shadow SH by using the vertex shader 11A.

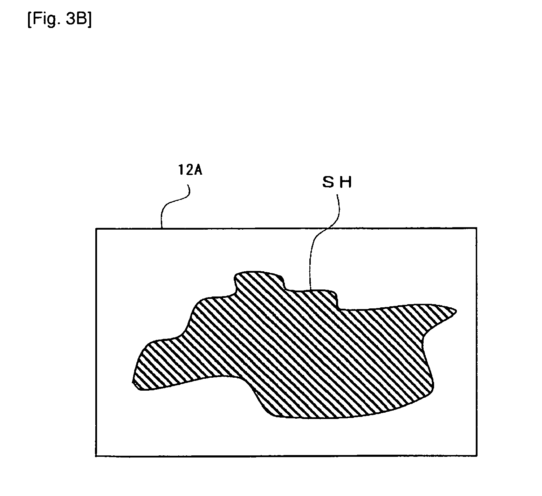

Fig. 3B is a schematic diagram showing the data of the shadow SH of the foreground FG written in the frame buffer 12A by the shadow generating means 101. Referring to Fig. 3B, a diagonally shaded area shows an area of the shadow SH. Inside the area, alpha values are larger than 0%, and accordingly the color of the shadow SH is displayed. Outside the area, alpha values are 0%, and accordingly the color of the shadow SH is not displayed. The data of the shadow SH is thus stored in the frame buffer 12A.

Note that a plurality of different shadows appear in the case where a single foreground and a plurality of light sources exist, a plurality of the foregrounds and a single light source exist, or a plurality of foregrounds and a plurality of light sources exist. In such a case, the shadow generating means 101 generates and writes data of shadows in turn into the frame buffer 12A. If a shadow newly generated overlaps another shadow previously written in the frame buffer 12A at a pixel, the shadow generating means 101 compares alpha values of the pixel between the newly generated shadow and the previously written shadow, and then selects a larger alpha value as an alpha value of the pixel. This can easily prevent redundant shadow rendering.

Referring again to Fig. 2, the background compositing means 102 alpha blends the data of the background stored in the VRAM 12 with image data in the frame buffer 12A, and then writes alpha blended data into the frame buffer 12A.

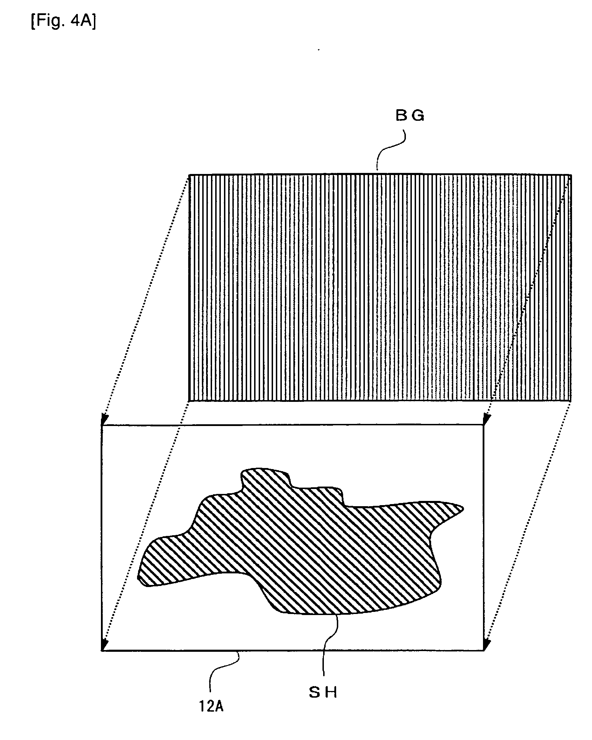

Fig. 4A is an illustration of alpha blending the data of the shadow SH of the foreground with data of a background BG by the background compositing means 102. Referring to Fig. 4A, the background compositing means 102 reads a set of pixel data of the background BG from the VRAM 12, alpha blends the set of pixel data of the background BG with a corresponding set of pixel data in the frame buffer 12A, and then replace the original pixel data in the frame buffer 12A with alpha blended pixel data. The background compositing means 102 repeats these processes for each set of pixel data in the frame buffer 12A, and can thereby write the alpha blended data of the shadow SH of the foreground and the background BG into the frame buffer 12A.

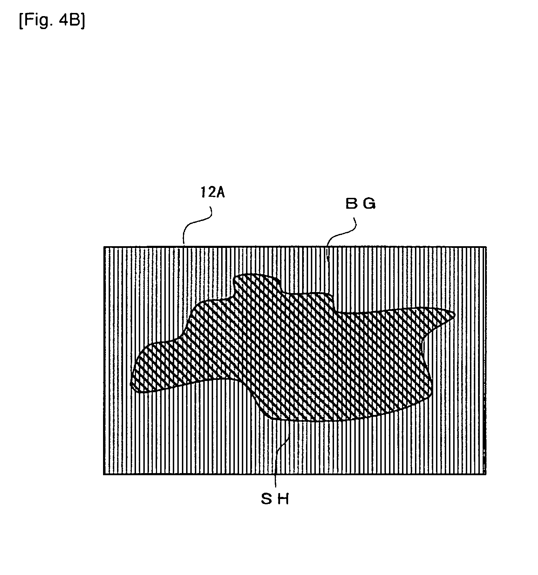

Fig. 4B is a schematic diagram showing data of the shadow SH of the foreground and the background BG alpha blended and written in the frame buffer 12A by the background compositing means 102. Referring to Fig. 4B, a diagonally shaded area shows the area of the shadow SH, and a vertically shaded area shows an area of the background BG. Inside the shadow SH, the color of the shadow SH and the color of the background BG are added and displayed in proportions depending on respective alpha values. Outside the shadow SH, on the other hand, the color of the background BG is displayed at a level weighted by the alpha value of the background BG.

Referring again to Fig. 2, the foreground compositing means 103 writes the data of the foreground stored in the VRAM 12 into the frame buffer 12A.

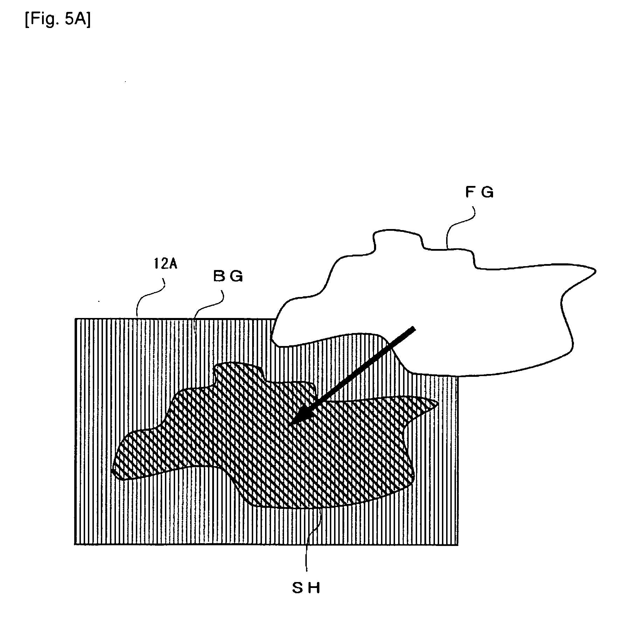

Fig. 5A is an illustration of writing the data of the foreground FG into the frame buffer 12A by the foreground compositing means 103. Referring to Fig. 5A, each time the foreground compositing means 103 reads a set of pixel data of the foreground FG from the VRAM 12, the means replaces a corresponding set of pixel data in the frame buffer 12A with the read set of pixel data. The foreground compositing means 103 repeats these processes for each set of pixel data of the foreground FG stored in the frame buffer 12A, and thereby writes the data of the foreground FG into the frame buffer 12A.

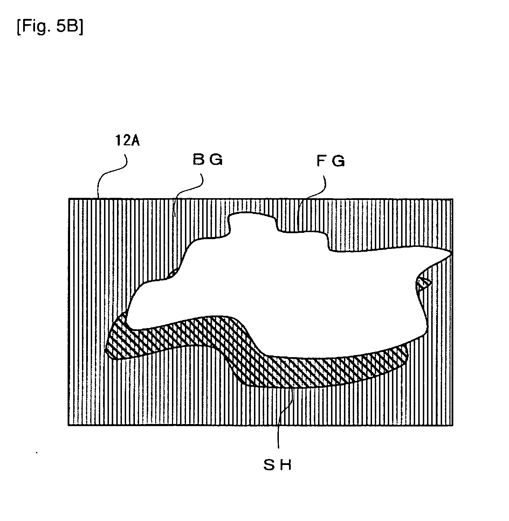

Fig. 5B is a schematic diagram showing the data of the foreground FG, the background BG, and the shadow SH of the foreground FG written in the frame buffer 12A by the foreground compositing means 103. Referring to Fig. 5B, a white area shows an area of the foreground FG, the diagonally shaded area shows the area of the shadow SH, and the vertically shaded area shows the area of the background BG. Inside the foreground FG, the color of the foreground FG is displayed at a level weighted by an alpha value of the foreground FG, irrespective of the color of the shadow SH and the color of the background BG. Outside the foreground FG, on the other hand, the composite image of the shadow SH and the background BG shown in Fig. 4B is displayed.

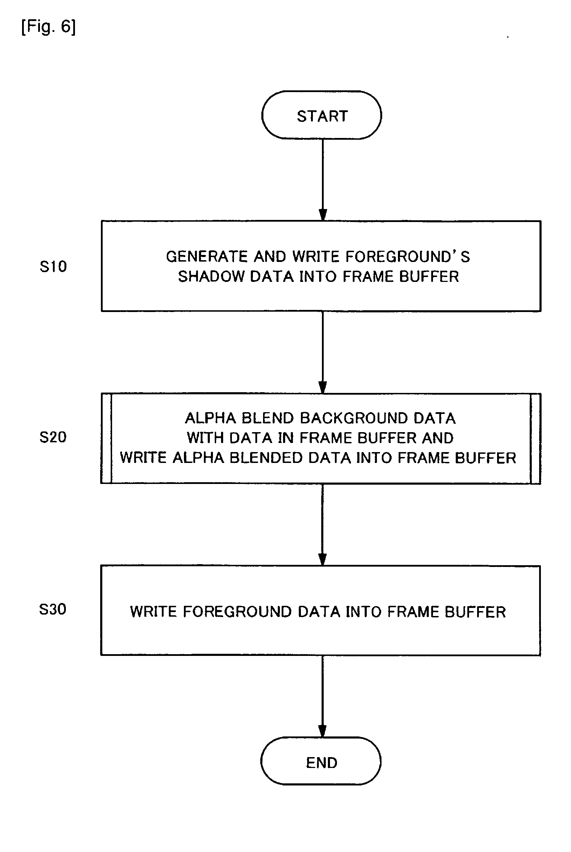

Fig. 6 is a flowchart of image processing method according to the first embodiment of the invention. Referring to Fig. 6, the image processing method by the image processing device 10A will be described below. The following processes will start, for example, when the GPU 11 receives an instruction for image processing from the CPU 21.

First, in Step S10, the shadow generating means 101 reads data of a foreground stored in the VRAM 12, and then generates and writes data of a shadow of a foreground into the frame buffer 12A.

Next, in Step S20, the background compositing means 102 alpha blends data of a background stored in the VRAM 12 with image data in the frame buffer 12A, and then writes alpha blended data into the frame buffer 12A. Details of this alpha blending procedure will be described later.

Next, in Step S30, the foreground compositing means 103 writes the foreground data stored in the VRAM 12 into the frame buffer 12A.

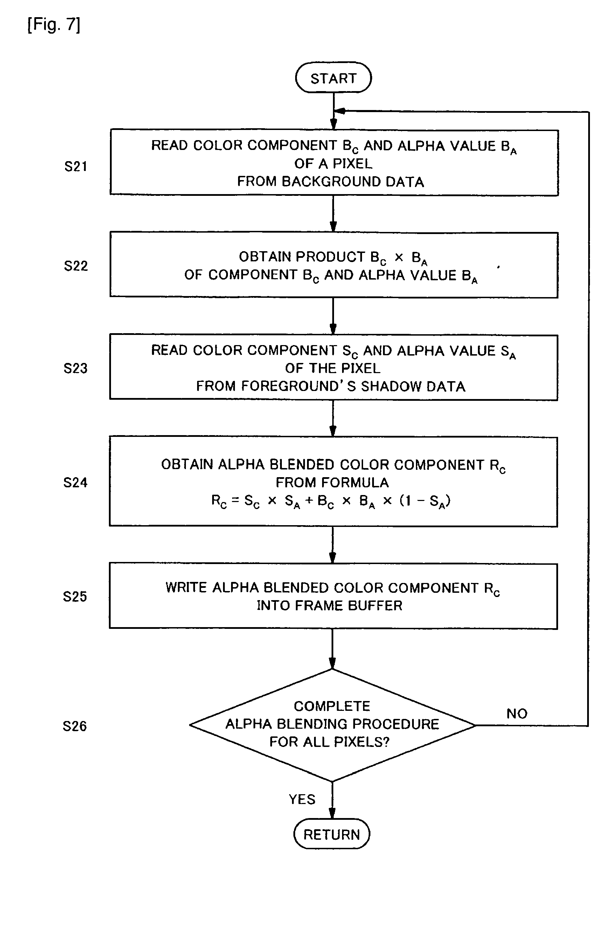

Fig. 7 is a flowchart of a procedure of alpha blending data of a shadow of a foreground with data of a background. Referring to Fig. 7, details of the alpha blending procedure will be described below.

First, in Step S21, the background compositing means 102 uses the pixel shader 11B to read a set of pixel data, i.e., color components $B_C$ and an alpha value $B_A$ of a pixel, from the background data stored in the VRAM 12.

Next, in Step S22, the background compositing means 102 uses the pixel shader 11B to calculate a product $B_C$ x $B_A$ of a read color component $B_C$ and an alpha value $B_A$ of the read set of pixel data. The product $B_C$ x $B_A$ is provided to the ROP unit 11C.

Next, in Step S23, the background compositing means 102 uses the ROP unit 11C to read a set of pixel data corresponding to the set of pixel data read in Step S21, i.e., color components $S_C$ and an alpha value $S_A$ of the pixel from the shadow data stored in the frame buffer 12A.

Next, in Step S24, the background compositing means 102 uses the ROP unit 11C to obtain an alpha blended color component $R_C$ from the following formula (1) by using the product $B_C$ x $B_A$ of the color component $B_C$ and the alpha value $B_A$ of the background, and the color component $S_C$ and the alpha value $S_A$ of the shadow of the foreground.

$$R_C = S_C \text{ x } S_A + B_C \text{ x } B_A \text{ x } (1 - S_A), \qquad (1)$$

Next, in Step S25, the background compositing means 102 uses the ROP unit 11C to write the alpha blended color component Rc into the frame buffer 12A.

Next, in Step S26, the background compositing means 102 uses the pixel shader 11B to determine whether the alpha blending procedure has been completed for all pixels of one frame. If there is a pixel where the alpha blending procedure has not been performed (in the case of "NO" in Step S26), the procedure is repeated from Step S21. If the alpha blending procedure has been completed for all the pixels (in the case of "YES" in Step S26), the procedure returns to the flowchart shown in Fig. 6 and goes to Step S30.

Here, an alpha blending function of a GPU described below is not used in the alpha blending procedure performed by the background compositing means 102. The reason is as follows.

A conventional alpha blending function alpha blends image data in a source buffer with image data previously written into a destination buffer. In particular, the GPU obtains an alpha blended color component $RSL_C$ from the following formula (2) by using a color component $DST_C$ in the destination buffer and a color component $SRC_C$ and an alpha value $SRC_A$ in the source buffer.

$$RSL_C = SRC_C \text{ x } SRC_A + DST_C \text{ x } (1 - SRC_A), \qquad (2)$$

In this case, a product of a color component and an alpha value of the original pixel data is used as the color component $DST_C$ in the destination buffer.

When the conventional alpha blending function is used, data of a background is previously written into the frame buffer, and then the frame buffer is designated as the destination buffer. Moreover, data of a shadow of a foreground is written in a temporary buffer separate from the frame buffer, and then the temporary buffer is designated as the source buffer. Thus, in the formula (2), the product $B_C \times B_A$ of the color component $B_C$ and the alpha value $B_A$ of the background is used as the color component $DST_C$ in the destination buffer, and the color component $S_C$ and the alpha value $S_A$ of the shadow of the foreground are used as the color component $SRC_C$ and the alpha value $SRC_A$ of the source buffer, respectively. Accordingly, the result $R_C$ of the formula (1) can be obtained as the result $RSL_C$ of the formula (2). In other words, data of the shadow of the foreground can be properly alpha blended with data of the background.

However, in the blending processes, if the data of the shadow of the foreground is previously written into the frame buffer 12A and the frame buffer 12A is designated as the destination buffer, and moreover an area of the VRAM 12 in which the data of the background is written is designated as the source buffer, the product $S_C \times S_A$ of the color component $S_C$ and the alpha value $S_A$ of the shadow of the foreground is used in the formula (2) as the color component $DST_C$ of the destination buffer, and the color component $B_C$ and the alpha value $B_A$ of the background are used as the color component $SRC_C$ and the alpha value $SRC_A$ of the source buffer, respectively. Accordingly, the result $RSL_C$ of the formula (2) differs from the result $R_C$ of the formula (1). In other words, the data of the background cannot be properly alpha blended with the data of the shadow of the foreground.

In the alpha blending procedure of Step S20, the background compositing means 102 realizes the calculation of the formula (1) by using calculation functions of the pixel shader 11B and the ROP unit 11C, instead of the conventional alpha blending function of the GPU 11. Thus, the background compositing means 101 can properly alpha blend data of a background with data of a shadow of a foreground, even when previously writing the shadow data into the frame buffer 12A.

The image processing device 10A according to the first embodiment writes data of a shadow of a foreground into the frame buffer 12A before writing data of a background thereinto, and then alpha blends the background data with image data in the frame buffer 12A by using the calculation of the formula (1) described above. Thus, the image processing device 10A can properly alpha blend the data of the shadow of the foreground with the background data without using a temporary buffer separate from the frame buffer 12A. As a result, the image processing device 10A can further reduce the capacity and bandwidth of a memory assigned to image processing, such as the VRAM 12.

The image processing device 10A according to the first embodiment uses the GPU 11 to realize the shadow generating means 101, the background compositing means 102, and the foreground compositing means 103. Alternatively, the image processing device 10A may use the CPU 21 to realize one or more of the three means 101, 102, and 103, instead of the GPU 11. In addition, each means 101, 102, and 103 may read foreground data and/or background data from the main memory 22 instead of the VRAM 12. Moreover, the frame buffer 12A may be embedded in the main memory 22 instead of the VRAM 12.

<The second embodiment>

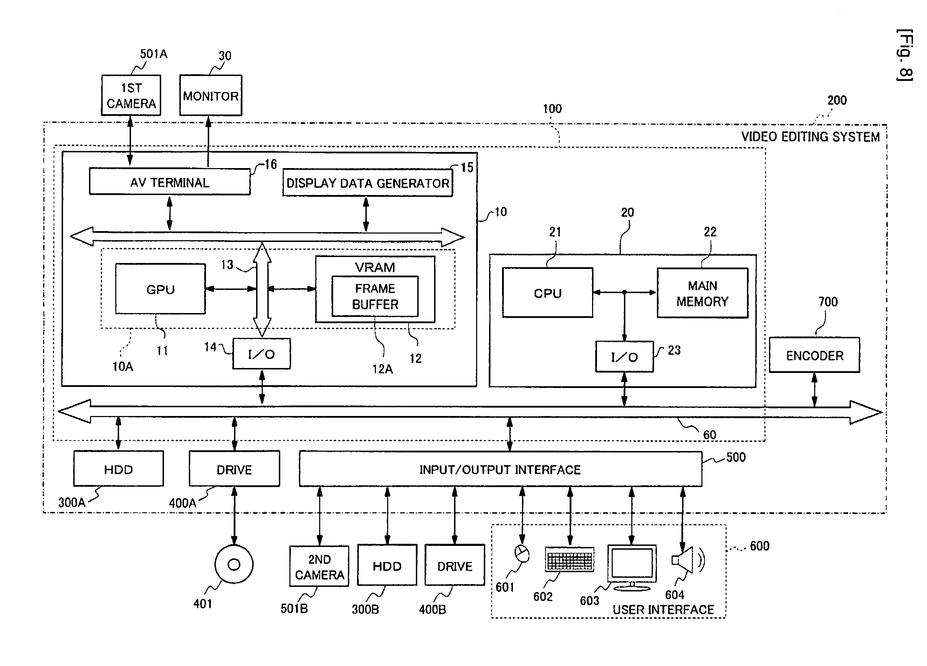

Fig. 8 is a block diagram showing a hardware configuration of a video editing system 200 according to the second embodiment of the invention. Referring to Fig. 8, the video editing system 200 according to the second embodiment is a nonlinear video editing system, realized by a computer terminal such as a personal computer. The video editing system 200 includes an image processing system 100, a HDD 300A, a drive 400A, an input/output interface 500, a user interface 600, and an encoder 700. In addition to these components, the video editing system 200 may further include a network interface allowing connections to an external LAN and/or the Internet.

The image processing system 100 includes a graphics board 10, a mother board 20, and a system bus 60. The graphics board 10 includes an image processing device 10A, an internal bus 13, an I/O 14, a display data generator 15, and an AV terminal 16. The mother board 20 includes a CPU 21, a main memory 22, and an I/O 23. The image processing system 100 includes components similar to the components shown in Fig. 1. In Fig. 8, these similar components are marked with the same reference numbers as the components shown in Fig. 1 are. A description of the similar components can be found above in the description of the first embodiment.

In the second embodiment, the CPU 21 controls components of the video editing system 200, in addition to the component of the image processing system 100. The AV terminal 16 includes, for example, an IEEE1394 interface, in addition to the connectors and the like, 16A, 16B, and 16C, shown in Fig. 1. The AV terminal 16 uses the IEEE1394 interface to provide/receive AV data to/from a first camera 501 A, respectively. The AV terminal 16 may provide/receive AV data to/from various types of devices for handling AV data such as VTRs, switchers, and AV data servers, in addition to the first camera 501 A.

The HDD 300A and the drive 400A are built in the computer terminal realizing the video editing system 200, and they are connected to the system bus 60. Note that an external HDD 300B connected to the system bus 60 through the input/output interface 500 may be provided instead of the HDD 300A, or both the HDD 300A and the HDD 300B may be provided, as shown in Fig. 8. The HDD 300B may be connected to the input/output interface 500 through a network. Similarly, an external drive 400B may be provided, instead of the drive 400A or in addition to the drive 400A.

The drive 400A and the drive 400B record/reproduce AV data, which includes video data and/or sound data, on/from a removable medium such as a DVD 401, respectively. Examples of removable media include optical discs, magnetic discs, magneto-optical discs, and semiconductor memory devices.

The input/output interface 500 connects components 61 - 64 of the user interface 600 and a storage medium built in an external device such as a second camera 501B, as well as the HDD 300B and the drive 400B, to the system bus 60. The input/output interface 500 uses an IEEE1394 interface or the like to provide/receive AV data to/from the second camera 501B, respectively. The input/output interface terminal 500 may provide/receive AV data to/from various types of devices for handling AV data such as VTRs, switchers, and AV data servers, in addition to the second camera 501B.

The user interface 600 is connected to the system bus 60 through the input/output interface 500. The user interface 600 includes, for example, a mouse 601, a keyboard 602, a display 603, and a speaker 604. The user interface 600 may also include other input devices such as a touch panel (not shown).

The encoder 700 is a circuit dedicated to AV data encoding, which uses, for example, the MPEG (Moving Picture Experts Group) standard to perform compression coding of AV data provided from the system bus 60 and provide the AV data to the system bus 60. Note that the encoder 700 may be integrated with the graphics board 10 or the mother board 20. Moreover, the encoder 700 may be implemented in the GPU 11. In addition, the encoder 700 may be used in coding of AV data not aiming at compression thereof.

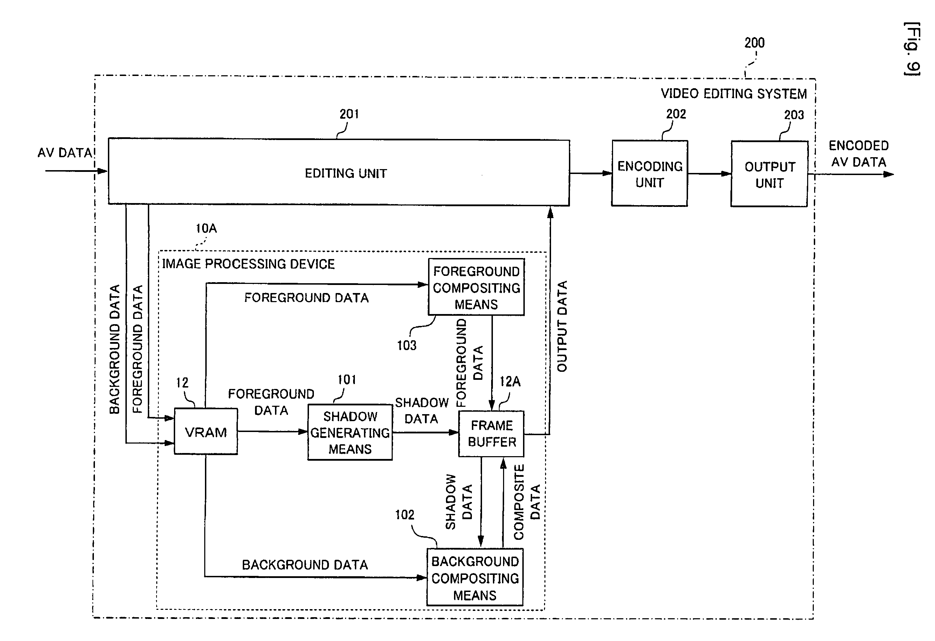

Fig. 9 is a block diagram showing a functional configuration of the video editing system 200 according to the second embodiment. Referring to Fig. 9, the video editing system 200 includes an editing unit 201, an encoding unit 202, and an output unit 203. These three functional units 201, 202, and 203 are realized by the CPU 21 executing predetermined programs. The image processing device 10A includes a shadow generating means 101, a background compositing means 102, and a foreground compositing means 103. These three means 101, 102, and 103 are similar to the means 101, 102, and 103 shown in Fig. 2, and accordingly, the description thereof can be found above in the description of the first embodiment.

The editing unit 201 follows user operations to select target AV data to be edited and generate edit information about the target AV data. The edit information is information about a specification of contents of processes for editing a series of AV data streams from the target AV data. The edit information includes, for example, a clip, i.e., information required for referencing a portion or the entire of material data constituting each portion of the AV data streams. The edit information further includes identification information and a format of a file including material data referenced by each clip, a type of the material data such as a still image or a moving image, one or more of an image size, aspect ratio, and frame rate of the material data, and/or time codes of the starting point and the endpoint of each referenced portion of the material data on a time axis, i.e., a timeline. The edit information additionally includes information about a specification of contents of each editing process, such as a decoding process and an effect process, applied to the material data referenced by each clip. Here, types of effect processing include color and brightness adjustment of images corresponding to each clip, special effects on the entirety of the images, composition of images between two or more clips, and the like.

The editing unit 201 further follows the edit information to read and edit the selected AV data, and then provide edited AV data as a series of AV data streams.

Specifically, the editing unit 201 first causes the display 603 included in the user interface 600 to display a list of files stored in resources such as the DVD 401, the HDD 300A, or the HDD 300B. The files include video data, audio data, still images, text data, and the like. A user operates the mouse 601 and/or the keyboard 602 to select a target file including data to be edited, i.e., material data, from the list. The editing unit 201 accepts the selection of the target file from the user, and then causes the display 603 to display a clip corresponding to the selected target file.

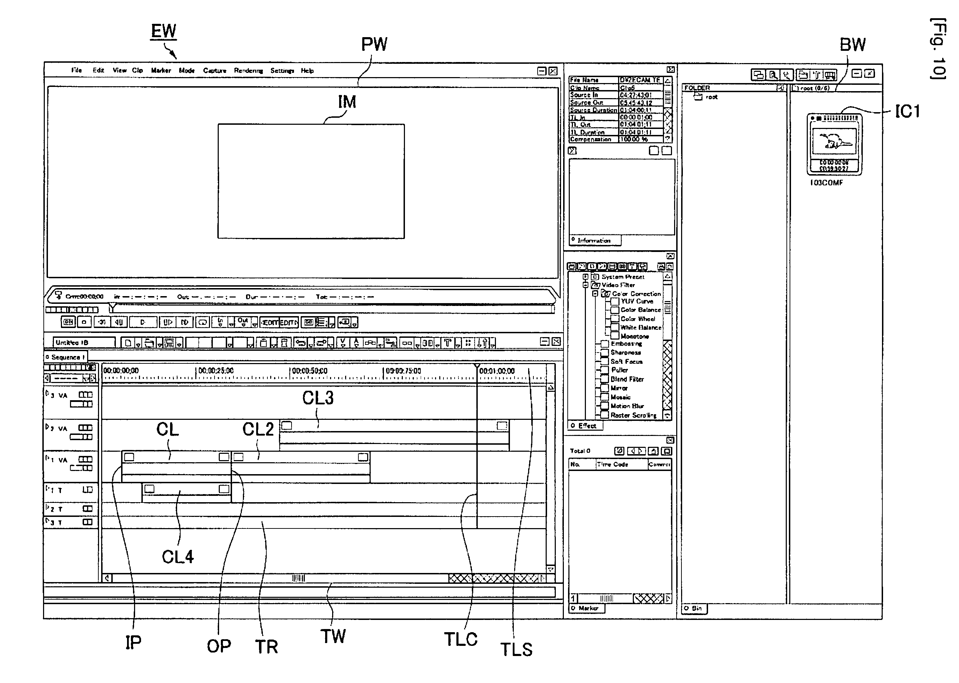

Fig. 10 shows an example of an edit window EW. The editing unit 201 causes the display 603 to display this edit window EW, and accepts edit operations by the user. Referring to Fig. 10, the edit window EW includes a material window BW, a timeline window TW, and a preview window PW, for example.

The editing unit 201A displays a clip IC1 corresponding to a selected target file on the material window BW

The editing unit 201A displays a plurality of tracks TR on the timeline window TW, and then accepts an arrangement of clips CL1 - CL4 on the tracks TR. As shown in Fig. 10, each track TR is a long band area extending in a horizontal direction of a screen. Each track TR represents information about locations on the timeline. In Fig. 10, locations in the horizontal direction on each track TR correspond to locations on the timeline such that a point moving on each track from left to right in the horizontal direction corresponds a point advancing on the timeline. The editing unit 201 accepts an arrangement of the clips CL1 - CL4 moved from the material window BW onto the tracks TR through operations of the mouse 601 by a user, for example.

The editing unit 201A may display a timeline cursor TLC and a time-axis scale TLS in the timeline window TW. In Fig. 10, the timeline cursor TLC is a straight line extending from the time-axis scale TLS in the vertical direction of the screen and intersecting with tracks TR at right angles. The timeline cursor TLC can move in the horizontal direction in the timeline window TW. The value of the time-axis scale TLS indicated by an end of the timeline cursor TLC represents a location on the timeline at intersections between the timeline cursor TLC and the tracks TR.

The editing unit 201 accepts settings of an IN point IP and an OUT point OP, i.e., a starting point and an endpoint on the timeline, respectively, of each clip CL1 - CL4 to be arranged on tracks TR, and changes of the IN point IP and the OUT point OP of each clip CL1 - CL4 after arranged on the tracks TR.

The editing unit 201 accepts from a user settings of effect processes for each clip CL1 - CL4 arranged on tracks TR, such as color and brightness adjustment of images corresponding to each clip CL1 - CL4, settings of special effects for the images, and composition of images between the second clip CL2 and the third clip CL3 arranged in parallel on different tracks TR.

The editing unit 201 displays in the preview window PW an image corresponding to a clip placed at a location on the timeline indicated by the timeline cursor TLC. In Fig. 10, an image IM is displayed in the preview window PW, the image IM corresponding to a point in the third clip CL3 indicated by the timeline cursor TLC. The editing unit 201 also displays moving images in the preview window PW, the moving images corresponding to a specified range in the clips CL1 - CL4 arranged in the timeline window TW. A user can confirm a result of an editing process accepted by the editing unit 201 from images displayed in the preview window PW.

The editing unit 201 generates edit information based on an arrangement of clips CL1 - CL4 on tracks TR in the timeline window TW and contents of editing processes for each clip CL1 - CL4. In addition, the editing unit 201 follows the edit information to read and decode material data from files referenced by the clips CL1 - CL4, apply the effect processes for the clips CL1 - CL4 to the read material data, concatenate resultant AV data in the order on the timeline, and provide the concatenated AV data as a series of AV data streams. In this case, if necessary, the editing unit 201 uses the image processing device 10A in decoding processes and/or effect processes.

The encoding unit 202 is a device driver of the encoder 700 shown in Fig. 8. Alternatively, the encoding unit 202 may be an AV data encoding module executed by the CPU 21. The encoding unit 202 codes the AV data streams provided from the editing unit 201. The encoding scheme is specified by the editing unit 201.

The output unit 203 converts the coded AV data streams into a predetermined file format or transmission format. The file format or transmission format is specified by the editing unit 201. Specifically, the output unit 203 adds data and parameters required for decoding and other specified data to the coded AV data streams, and then converts the entirety of the data into the specified format, if necessary, by using the display data generator 15 and/or the AV terminal 16 shown in Fig. 8.

Moreover, the output unit 203 writes the formatted AV data streams through the system bus 60 into a certain storage medium such as the HDD 300A, the HDD 300B, and the DVD 401 and the like mounted on the drive 400A or the drive 400B. In addition, the output unit 203 can also transmit the formatted AV data streams to a database or an information terminal connected through the network interface. The output unit 203 can also provide the formatted AV data streams to external devices through the AV terminal 16 and the input/output interface 500.

The editing unit 201 uses the shadow generating means 101, the background compositing means 102, and the foreground compositing means 103 of the image processing device 10A in effect processing. Thus, the editing unit 201 can provide, as a type of effect processing, a procedure of generating a shadow of an image corresponding to, for example, the second clip CL2 shown in Fig. 10, or generating a predetermined virtual object, such as a sphere and a box, and a shadow thereof, then rendering the generated shadow and/or the object onto a background corresponding to, for example, the third clip CL3 shown in Fig. 10. The editing unit 201 writes foreground data and background data into the VRAM 12, and then instructs the image processing device 10A to generate a shadow. As a result, data of a composite image of the foreground, the shadow thereof, and the background provided from the image processing device 10A is provided to the encoding unit 202 by the editing unit 201, or displayed on the monitor 30 and/or the display 603 by the display data generator 15, the AV terminal 16, and/or the input/output interface 500.

The image processing device 10A in the video editing system 200 according to the second embodiment, like the equivalent according to the first embodiment, writes data of a shadow of a foreground into the frame buffer 12A before writing background data thereinto, and then alpha blends the background data with image data in the frame buffer 12A by using the calculation of the formula (1). Accordingly, the image processing device 10A can properly alpha blend the data of the shadow of the foreground with the background data without using a temporary buffer separate from the frame buffer 12A. As a result, the video editing system 200 according to the second embodiment can further reduce the capacity and bandwidth of a memory assigned to image processing, such as the VRAM 12.

Note that the video editing system 200 according to the second embodiment uses the GPU 11 to realize the shadow generating means 101, the background compositing means 102, and the foreground compositing means 103. Alternatively, the video editing system 200 may use the CPU 21 to realize one or more of the three means 101, 102, and 103, instead of the GPU 11. In addition, each means 101, 102, and 103 may read foreground data and/or background data from the main memory 22 instead of the VRAM 12. Moreover, the frame buffer 12A may be embedded in the main memory 22 instead of the VRAM 12.

While only selected embodiments have been chosen to illustrate the present invention, it will be apparent to those skilled in the art from this disclosure that various changes and modifications can be made herein without departing from the scope of the invention defined in the independent claims. Furthermore, the detailed descriptions of the embodiments according to the present invention provided for illustration only, and not for the purpose of limiting the invention as defined by the present claims and specifications.

**Claims**

1.  A device (10A) comprising:

    a memory (12) storing pixel data of a foreground and a background in an image;
    a buffer (12A); and
    a processor (11) connected to the memory and the buffer,
    the processor (11) configured to:

    read the foreground pixel data from the memory (12), generate pixel data of a shadow of the foreground, and write the shadow pixel data into the buffer (12A);
    read the shadow pixel data from the buffer (12A), alpha blend the shadow pixel data with the background pixel data, and write alpha blended pixel data into the buffer (12A) by replacing the shadow pixel data in the buffer (12A) with the alpha blended pixel data; and
    write the foreground pixel data into the buffer (12A) in which the alpha blended pixel data is written by replacing corresponding pixel data in the buffer (12A) with the foreground pixel data,
    the processor (11) further configured to:

    be capable of generating pixel data of a plurality of shadows; and
    when pixel data of a plurality of shadows is generated, compare alpha value of a pixel in a newly generated shadow pixel data with alpha value of the pixel in a previously generated shadow pixel data written in the buffer (12A) and select a larger alpha value as an alpha value for the pixel.

2.  The device according to claim 1, wherein in the alpha blending, the processor (11) calculates a composite value for each pixel by a formula (1) described below, and writes a calculated composite value as the alpha blended data into the buffer (12A),

    $$\texttt{Composite Value = } (S_C) \texttt{ x } (S_A) \texttt{ + } (B_C) \texttt{ x } (B_A) \texttt{ x } (1 - S_A), \ldots \ldots (1)$$

    where $S_C$ is a color component of the shadow, $S_A$ is an alpha value of the shadow, $B_C$ is a color component of the background, and $B_A$ is an alpha value of the background.

3.  The device according to claim 2, wherein the processor (11) is dedicate to graphics processing, and when alpha blending the shadow pixel data with the background pixel data, the processor (11) performs the multiplication process $(B_C)$ x $(B_A)$ in the formula (1) by a pixel shader (11B).

4.  The device according to claim 1, wherein the buffer (12A) is a frame buffer for storing image data processed for output.

5.  A computer-implemented, automated method comprising:

    generating pixel data of a plurality of shadows of a foreground from pixel data of the foreground and writing the shadow pixel data into a buffer (S10);
    reading the shadow pixel data from the buffer, alpha blending the shadow pixel data with the background pixel data, and writing alpha blended pixel data into the buffer (S20) by replacing the shadow pixel data in the buffer with the alpha blended pixel data; and
    writing the foreground pixel data into the buffer in which the alpha blended pixel data is written (S30) by replacing corresponding pixel data in the buffer with the foreground pixel data,
    the method further comprising comparing alpha value of a pixel in a newly generated shadow pixel data with alpha value of the pixel in a previously generated shadow pixel data written in the buffer, and selecting a larger alpha value as an alpha value for the pixel.

6.  A storage medium readable by a computer, the storage medium storing a program for a device (10A) comprising:

a memory (12) storing data of a foreground and a background in an image;
a buffer (12A); and
a processor (11) connected to the memory and the buffer, the program causing the processor (11) to:

generate pixel data of a plurality of shadows of a foreground from the foreground pixel data, and write the shadow pixel data into the buffer (S10);
read the shadow pixel data from the buffer, alpha blend the shadow pixel data with the background pixel data, and write alpha blended pixel data into the buffer (S20) by replacing the shadow pixel data in the buffer with the alpha blended pixel data; and
write the foreground pixel data into the buffer in which the alpha blended pixel data is written (S30) by replacing corresponding pixel data in the buffer with the foreground pixel data,

the program further causing the processor (11) to compare alpha value of a pixel in a newly generated shadow pixel data with alpha value of the pixel in a previously generated shadow pixel data written in the buffer (12A), and select a larger alpha value as an alpha value for the pixel.

7.  A video editing system (200) comprising:

an editing unit (201) editing video data; and
the device (10A) according to claim 1.

**Patentansprüche**

1.  Vorrichtung (10A), die umfasst:

einen Speicher (12), der Pixeldaten eines Vordergrunds und eines Hintergrunds in einem Bild speichert;
einen Puffer (12A); und
einen Prozessor (11), der mit dem Speicher und mit dem Puffer verbunden ist, wobei der Prozessor (11) konfiguriert ist zum:

Lesen der Vordergrundpixeldaten aus dem Speicher (12), Erzeugen von Pixeldaten eines Schattens des Vordergrunds und Schreiben der Schattenpixeldaten in den Puffer (12A);
Lesen der Schattenpixeldaten aus dem Puffer (12A), Alpha-Blending der Schattenpixeldaten mit den Hintergrundpixeldaten und Schreiben der durch Alpha-Blending überlagerten Pixeldaten in den Puffer (12A) durch Ersetzen der Schattenpixeldaten in dem Puffer (12A) durch die durch Alpha-Blending überlagerten Pixeldaten; und
Schreiben der Vordergrundpixeldaten in den Puffer (12A), in den die durch Alpha-Blending überlagerten Pixeldaten geschrieben worden sind, durch Ersetzen entsprechender Pixeldaten in dem Puffer (12A) durch die Vordergrundpixeldaten,

wobei der Prozessor (11) ferner für Folgendes konfiguriert ist:

Pixeldaten mehrerer Schatten erzeugen zu können; und
wenn Pixeldaten mehrerer Schatten erzeugt werden, den Alphawert eines Pixels in neu erzeugten Schattenpixeldaten mit dem Alphawert des Pixels in zuvor erzeugten Schattenpixeldaten, die in den Puffer (12A) geschrieben worden sind, zu vergleichen und einen größeren Alphawert als einen Alphawert für das Pixel auszuwählen.

2.  Vorrichtung nach Anspruch 1, bei der der Prozessor (11) in dem Alpha-Blending durch eine unten beschriebene Formel (1) einen zusammengesetzten Wert für jedes Pixel berechnet und einen berechneten zusammengesetzten Wert als die durch Alpha-Blendung überlagerten Daten in den Puffer (12A) schreibt:

$$\text{zusammengesetzter Wert} = (S_C) \cdot (S_A) + (B_C) \cdot (B_A) \cdot (1 - S_A), \dots \quad (1),$$

wobei $S_C$ eine Farbkomponente des Schattens ist, $S_A$ ein Alphawert des Schattens ist, $B_C$ eine Farbkomponente des Hintergrunds ist und $B_A$ ein Alphawert des Hintergrunds ist.

3. Vorrichtung nach Anspruch 2, bei der der Prozessor (11) für die Graphikverarbeitung dediziert ist und der Prozessor (11) beim Alpha-Blending der Schattenpixeldaten mit den Hintergrundpixeldaten den Multiplikationsprozess ($B_C$) ($B_A$) in der Formel (1) durch einen Pixel-Shader (11B) ausführt.

4. Vorrichtung nach Anspruch 1, bei der der Puffer (12A) ein Einzelbildpuffer zum Speichern verarbeiteter Bilddaten für die Ausgabe ist.

5. Computerimplementiertes automatisches Verfahren, das umfasst:

Erzeugen von Pixeldaten mehrerer Schatten eines Vordergrunds aus Pixeldaten des Vordergrunds und Schreiben der Schattenpixeldaten in einen Puffer (S10);
Lesen der Schattenpixeldaten aus dem Puffer, Alpha-Blending der Schattenpixeldaten mit den Hintergrundpixeldaten und Schreiben der durch Alpha-Blending überlagerten Pixeldaten in den Puffer (S20) durch Ersetzen der Schattenpixeldaten in dem Puffer durch die durch Alpha-Blending überlagerten Pixeldaten; und
Schreiben der Vordergrundpixeldaten in den Puffer, in den die durch Alpha-Blending überlagerten Pixeldaten geschrieben worden sind (S30), durch Ersetzen entsprechender Pixeldaten in dem Puffer durch die Vordergrundpixeldaten,
wobei das Verfahren ferner umfasst:

Vergleichen des Alphawerts eines Pixels in neu erzeugten Schattenpixeldaten mit dem Alphawert des Pixels in zuvor erzeugten Schattenpixeldaten, die in den Puffer geschrieben worden sind, und Auswählen eines größeren Alphawerts als einen Alphawert für das Pixel.

6. Ablagemedium, das durch einen Computer lesbar ist, wobei das Ablagemedium ein Programm für eine Vorrichtung (10A) speichert, wobei das Ablagemedium umfasst:

einen Speicher (12), der Daten eines Vordergrunds und eines Hintergrunds in einem Bild speichert;
einen Puffer (12A); und
einen Prozessor (11), der mit dem Speicher und mit dem Puffer verbunden ist, wobei das Programm veranlasst, dass der Prozessor (11):

aus den Vordergrundpixeldaten Pixeldaten mehrerer Schatten eines Vordergrunds erzeugt und die Schattenpixeldaten in den Puffer schreibt (S10);
die Schattenpixeldaten aus dem Puffer liest, die Schattenpixeldaten mit den Hintergrundpixeldaten durch Alpha-Blending überlagert und die durch Alpha-Blending überlagerten Pixeldaten durch Ersetzen der Schattenpixeldaten in dem Puffer durch die durch Alpha-Blending überlagerten Pixeldaten in den Puffer (S20) schreibt; und
die Vordergrundpixeldaten durch Ersetzen entsprechender Pixeldaten in dem Puffer durch die Vordergrundpixeldaten in den Puffer schreibt, in den die durch Alpha-Blending überlagerten Pixeldaten geschrieben worden sind (S30), wobei das Programm ferner veranlasst, dass der Prozessor (11) den Alphawert eines Pixels in neu erzeugten Schattenpixeldaten mit dem Alphawert des Pixels in zuvor erzeugten Schatten-Pixeldaten, die in den Puffer (12A) geschrieben worden sind, vergleicht und einen größeren Alphawert als einen Alphawert für das Pixel auswählt.

7. Videobearbeitungssystem (200), das umfasst:

eine Bearbeitungseinheit (201), die Videodaten bearbeitet; und
die Vorrichtung (10A) nach Anspruch 1.

## Revendications

1. Dispositif (10A) comprenant :

une mémoire (12) stockant des données de pixel d'un avant-plan et d'un arrière-plan dans une image ;

un tampon (12A) ; et
un processeur (11) connecté à la mémoire et au tampon, le processeur (11) étant configuré pour :

lire les données de pixel d'avant-plan depuis la mémoire (12), générer des données de pixel d'une ombre de l'avant-plan et écrire les données de pixel d'ombre dans le tampon (12A) ;
lire les données de pixel d'ombre depuis le tampon (12A), simuler la transparence des données de pixel d'ombre avec les données de pixel d'arrière-plan et écrire des données de pixel simulées en transparence dans le tampon (12A) en remplaçant les données de pixel d'ombre dans le tampon (12A) par les données de pixel simulées en transparence ; et
écrire les données de pixel d'avant-plan dans le tampon (12A) dans lequel les données de pixel simulées en transparence sont écrites en remplaçant des données de pixel correspondantes dans le tampon (12A) par les données de pixel d'avant-plan,

le processeur (11) étant en outre configuré pour :

être capable de générer des données de pixel d'une pluralité d'ombres ; et
lorsque des données de pixel d'une pluralité d'ombres sont générées, comparer la valeur alpha d'un pixel dans des données de pixel d'ombre nouvellement générées à la valeur alpha du pixel dans des données de pixel d'ombre générées antérieurement écrites dans le tampon (12A) et sélectionner une valeur alpha supérieure comme valeur alpha pour le pixel.

2. Dispositif selon la revendication 1, dans lequel le processeur (11) calcule lors de la simulation de transparence une valeur composite pour chaque pixel par une formule (1) décrite ci-dessous et écrit une valeur composite calculée comme données simulées en transparence dans le tampon (12A),

$$\texttt{Valeur Composite = (S}_\texttt{C}\texttt{) x (S}_\texttt{A}\texttt{) + (B}_\texttt{C}\texttt{) x (B}_\texttt{A}\texttt{) x (1 - S}_\texttt{A}\texttt{),}$$

$$\texttt{..... (1)}$$

où $S_C$ est une composante couleur de l'ombre, $S_A$ est une valeur alpha de l'ombre, $B_C$ est une composante couleur de l'arrière-plan et $B_A$ est une valeur alpha de l'arrière-plan.

3. Dispositif selon la revendication 2, dans lequel le processeur (11) est dédié au traitement de graphiques et lors de la simulation de transparence des données de pixel d'ombre avec les données de pixel d'arrière-plan, le processeur (11) réalise le processus de multiplication $(B_C)$ x $(B_A)$ dans la formule (1) par un nuanceur de pixels (11B).

4. Dispositif selon la revendication 1, dans lequel le tampon (12A) est un tampon de trame pour stocker des données d'image traitées pour émission.

5. Procédé automatisé mis en oeuvre par ordinateur comprenant :

la génération de données de pixel d'une pluralité d'ombres d'un avant-plan à partir de données de pixel de l'avant-plan et l'écriture des données de pixel d'ombre dans un tampon (S10) ;
la lecture des données de pixel d'ombre depuis le tampon, la simulation de transparence des données de pixel d'ombre avec les données de pixel d'arrière-plan et l'écriture des données de pixel simulées en transparence dans le tampon (S20) en remplaçant les données de pixel d'ombre dans le tampon par les données de pixel simulées en transparence ; et
l'écriture des données de pixel d'avant-plan dans le tampon dans lequel les données de pixel simulées en transparence sont écrites (S30) en remplaçant des données de pixel correspondantes dans le tampon par les données de pixel d'avant-plan,
le procédé comprenant en outre la comparaison de la valeur alpha d'un pixel dans des données de pixel d'ombre nouvellement générées à la valeur alpha du pixel dans des données de pixel d'ombre générées antérieurement écrites dans le tampon et la sélection d'une valeur alpha supérieure comme valeur alpha pour le pixel.

6. Support de stockage lisible par un ordinateur, le support de stockage stockant un programme pour un dispositif (10A) comprenant :

une mémoire (12) stockant des données d'un avant-plan et d'un arrière-plan dans une image ;
un tampon (12A) ; et
un processeur (11) connecté à la mémoire et au tampon, le programme poussant le processeur (11) à :

générer des données de pixel d'une pluralité d'ombres d'un avant-plan à partir des données de pixel d'avant-plan et écrire les données de pixel d'ombre dans le tampon (S10) ;
lire les données de pixel d'ombre depuis le tampon, simuler la transparence des données de pixel d'ombre avec les données de pixel d'arrière-plan et écrire des données de pixel simulées en transparence dans le tampon (S20) en remplaçant les données de pixel d'ombre dans le tampon par les données de pixel simulées en transparence ; et
écrire les données de pixel d'avant-plan dans le tampon dans lequel les données de pixel simulées en transparence sont écrites (S30) en remplaçant des données de pixel correspondantes dans le tampon par les données de pixel d'avant-plan,

le programme poussant en outre le processeur (11) à comparer la valeur alpha d'un pixel dans des données de pixel d'ombre nouvellement générées à la valeur alpha du pixel dans des données de pixel d'ombre générées antérieurement écrites dans le tampon (12A) et
sélectionner une valeur alpha supérieure comme valeur alpha pour le pixel.

7.  Système d'édition vidéo (200) comprenant :

un module d'édition (201) éditant des données vidéo ; et
le dispositif (10A) selon la revendication 1.

[Fig. 1]

[Fig. 2]

IMAGE PROCESSING DEVICE

10A

FOREGROUND DATA

BACKGROUND DATA

VRAM — 12

FOREGROUND DATA — 12

FOREGROUND DATA

BACKGROUND DATA

SHADOW GENERATING MEANS — 101

SHADOW DATA

FOREGROUND COMPOSITING MEANS — 103

FOREGROUND DATA

BACKGROUND COMPOSITING MEANS — 102

SHADOW DATA

COMPOSITE DATA

FRAME BUFFER — 12A

OUTPUT DATA

[Fig. 3A]

[Fig. 3B]

[Fig. 4A]

BG

12A

SH

[Fig. 4B]

[Fig. 5A]

[Fig. 5B]

[Fig. 6]

START

**S10** — GENERATE AND WRITE FOREGROUND'S SHADOW DATA INTO FRAME BUFFER

**S20** — ALPHA BLEND BACKGROUND DATA WITH DATA IN FRAME BUFFER AND WRITE ALPHA BLENDED DATA INTO FRAME BUFFER

**S30** — WRITE FOREGROUND DATA INTO FRAME BUFFER

END

[Fig. 7]

START

S21 | READ COLOR COMPONENT $B_C$ AND ALPHA VALUE $B_A$
OF A PIXEL
FROM BACKGROUND DATA

S22 | OBTAIN PRODUCT $B_C \times B_A$
OF COMPONENT $B_C$ AND ALPHA VALUE $B_A$

S23 | READ COLOR COMPONENT $S_C$ AND ALPHA VALUE $S_A$
OF THE PIXEL
FROM FOREGROUND'S SHADOW DATA

S24 | OBTAIN ALPHA BLENDED COLOR COMPONENT $R_C$
FROM FORMULA
$R_C = S_C \times S_A + B_C \times B_A \times (1 - S_A)$

S25 | WRITE ALPHA BLENDED COLOR COMPONENT $R_C$
INTO FRAME BUFFER

S26 | COMPLETE
ALPHA BLENDING PROCEDURE
FOR ALL PIXELS?

NO

YES

RETURN

[Fig. 8]

[Fig. 9]

[Fig. 10]

## REFERENCES CITED IN THE DESCRIPTION

**Patent documents cited in the description**

- US 6437782 B

- US 20040237053 A1

**Non-patent literature cited in the description**

- **TOMAS AKENINE-MÖLLER ; ERIC HAINES.** Real-time Rendering. A K PETERS, Ltd, 101-106148-149250-254